Europäisches Patentamt

European Patent Office

Office européen des brevets

(19)

(11) **EP 1 167 947 A2**

(12) **EUROPEAN PATENT APPLICATION**

(43) Date of publication:
**02.01.2002 Bulletin 2002/01**

(51) Int Cl.⁷: **G01N 9/26**, G01N 9/36

(21) Application number: **01109072.7**

(22) Date of filing: **11.04.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **26.06.2000 JP 2000190657
31.08.2000 JP 2000263609
07.12.2000 JP 2000372529
25.01.2001 JP 2001016578**

(71) Applicant: **Yokogawa Electric Corporation
Tokyo 180-8750 (JP)**

(72) Inventors:
• **Komiya, Hideaki, c/o Yokogawa Electric Corp.
Musashino-shi, Tokyo 180-8750 (JP)**
• **Morita, Saichiro, c/o Yokogawa Electric Corp.
Musashino-shi, Tokyo 180-8750 (JP)**
• **Uchiyama, Keijiro,
Yokogawa Denshikiki Co., Ltd.
Hatano-shi, Kanagawa 257-8502 (JP)**
• **Ochi, Takashi, Yokogawa Denshikiki Co., Ltd.
Hatano-shi, Kanagawa 257-8502 (JP)**

(74) Representative: **Henkel, Feiler, Hänzel
Möhlstrasse 37
81675 München (DE)**

(54) **Methods and apparatus for measuring suspended-substance concentrations**

(57)    A general object of the present invention is to provide methods and apparatus for measuring suspended-substance concentrations that allow for real-time, continuous measurement and easy maintenance and control, and offer high measurement accuracy and wide measuring ranges.

According to the present invention, a method is provided for measuring the concentration of suspended substances mixed with a liquid, wherein the pressure difference between two points distantly located in the depth direction of the liquid is detected, the average density of the liquid between the two points is calculated from the pressure difference, and the difference between the average density and the predetermined reference density of the liquid is calculated as an index for determining the suspended-substance concentration.

FIG.1

4 DETECTOR PIPE(HIGH PRESSURE SIDE)
3 DETECTOR PIPE(LOW PRESSURE SIDE)

H2
H1
h3
h4
h2
H
P1  P2
H  L
h1
5 COMPUTING UNIT
2 DIFFERENEIAL PRESSURE TRANSMILTTER
1 TANK

## Description

## BACKGROUND OF THE INVENTION

### Field of the Invention

The present invention relates to methods and apparatus for measuring suspended-substance concentrations by measuring the pressure difference between two points distantly located in the depth direction of a stream flow and thereby determining the average density of the stream flow between the two points, whereby a suspended-substance concentration between the two points is measured.

### Description of the Prior Art

An increase in the amount of such suspended matter as sand, gravel or dirt in a dam, reservoir, or river may adversely affect the ecological system of animals and plants living there. In some cases, the suspended matter may accumulate on the bottom of the dam. The generation of electric power by draining water from the dam will then suffer problems such as damage to power plant equipment due to the suspended matter.

Accordingly, it has been a routine practice to measure suspended-substance concentrations in order to control the water quality of dams, reservoirs or rivers. In case the concentration exceeds the control limit, such measures are taken as stopping the inflow of water from rivers to the dam or dredging sediments from the bottom of the dam.

Already known conventional methods for measuring suspended-substance concentrations include a) placing an optical detector at a measuring point in running water, radiating light at the optical detector through the running water, and detecting the intensity of transmitted or scattered light, or b) collecting a sample from the running water and measuring the sample's turbidity in an optical way, for example.

Such conventional methods have had the following problems, however.

1. The method of collecting a sample from running water is not an automatic measurement. Consequently, real-time, continuous measurement is not feasible.

2. Although capable of automatic continuous measurement, the method of placing an optical detector at a measuring point in running water cannot easily perform long-term, continuous and consistent measurement since the optical detector is placed under water and therefore becomes contaminated with earth and sand that accumulate on it or adhere to it. This will result in an increase in the cost of maintenance and control work, such as removing earth and sand accumulating on or adhering to the optical detector or replacing the detector itself.

3. An alarm must be raised at a concentration of approximately 30 ppm for dams of power plants and at concentrations of 1000 to 10000 ppm for regular dams, for example. On the other hand, the method of placing an optical detector at a measuring point in running water suffers significant measurement errors due to the color of suspended earth and sand or the accumulation thereof upon the optical detector. Consequently, the measuring range is usually limited to about 1000 to 2000 ppm. Since the measuring range provided by the method is so narrow, the method cannot be used to control dam water quality, so is limited to specific applications.

The present invention has been made to solve the above-mentioned problems. According to the invention, the pressure difference between two points distantly located in the depth direction of a stream flow is detected with a differential pressure transmitter, the average density of the stream flow between the two points is calculated from the pressure difference, and the difference between the average density and the reference density of the stream flow is used as an index for measuring suspended-substance concentrations. Through this approach, the present invention enables the provision of methods and apparatus for measuring suspended-substance concentrations that allow for real-time, continuous measurement and easy maintenance and control, and offer high measurement accuracy and wide measuring ranges.

### SUMMARY OF THE INVENTION

According to the present invention, there are provided methods and apparatus for measuring suspended-substance concentrations in order to solve the above-mentioned problems, in which the methods and apparatus are defined as:

1) A method for measuring the concentration of suspended substances mixed with a stream flow, wherein the pressure difference between two points distantly located in the depth direction of the stream flow is detected, the average density of the stream flow between the two points is calculated from the pressure difference, and the difference between the average density and the predetermined reference density of the stream flow is calculated as an index for determining the suspended-substance concentration.

2) The method of definition 1, wherein an ambient temperature at which the pressure difference is detected and the temperature of the stream flow are measured, the pressure difference is temperature-corrected according to the measured ambient temperature, and the average density is also temperature-corrected according to the measured temperature of the stream flow.

3) An apparatus to be submerged in a stream flow in which suspended substances are mixed in order to measure the suspended-substance concentration of the stream flow, comprising:

low-pressure side and high-pressure side detector units submerged down to two points distantly located in the depth direction of the stream flow;

a differential pressure transmitter for converting the difference between pressures detected by the low-pressure side and high-pressure side detector units to an electric signal; and

a computing unit for calculating the average density of the stream flow between the two points according to the output of the differential pressure transmitter and further calculating the difference between the average density and the predetermined reference density of the stream flow as an index for determining the suspended-substance concentration.

4) The apparatus of definition 3, wherein the low-pressure side detector unit is a detector pipe (low pressure side) connected to the differential pressure transmitter and sealed with the liquid in which none of the suspended substances is mixed and the high-pressure side detector unit is a detector pipe (high pressure side) also connected to the differential pressure transmitter and sealed with the liquid in which none of the suspended substances is mixed either.

5) The apparatus of definition 3, further comprising:

first ripple removal means arranged in the vicinity of the detector pipe (low pressure side) in order to remove ripples of the stream flow produced near the detector pipe (low pressure side); and

second ripple removal means arranged in the vicinity of the detector pipe (high pressure side) in order to remove ripples of the stream flow produced near the detector pipe (high pressure side).

6) The apparatus of definition 5 having a sensor unit, wherein the detector pipe (low pressure side), the detector pipe (high pressure side), the differential pressure transmitter, the first ripple removal means, and the second ripple removal means are fixed to the sensor unit so as to be integral therewith and the sensor unit is submerged in the stream flow.

7) An apparatus to be submerged in a stream flow in which suspended substances are mixed in order to measure the suspended-substance concentration of the stream flow, comprising:

straightner plate 1 (low pressure side) and straightner plate 2 (low pressure side) which are flat and submerged in the stream flow with the surfaces thereof positioned virtually perpendicular to the stream flow's surface, while being arranged to be distant from and opposite to each other;

a low side pressure hole provided on either of the opposing surfaces of the straightner plate 1 (low pressure side) and straightner plate 2 (low pressure side);

a detector pipe (low pressure side) connected to either of the straightner plate 1 (low pressure side) and straightner plate 2 (low pressure side) so as to lead into the low side pressure hole;

straightner plate 1 (low pressure side) and straightner plate 2 (low pressure side) which are flat and submerged in the depth direction of the stream flow distantly from the straightner plate 1 (low pressure side) and straightner plate 2 (low pressure side), with the surfaces thereof positioned virtually perpendicular to the stream flow's surface, while being arranged to be distant from and opposite to each other;

a high-side pressure hole provided on either of the opposing surfaces of the straightner plate 1 (high pressure side) and straightner plate 2 (high pressure side);

a detector pipe (high pressure side) connected to either of the straightner plate 1 (low pressure side) and straightner plate 2 (low pressure side) so as to lead into the high-side pressure hole;

a differential pressure transmitter for converting the difference between pressures detected by the detector pipe (low pressure side) and detector pipe (high pressure side) to an electric signal; and

a computing unit for calculating the average density of the liquid according to the output of the differential pressure transmitter and further calculating the difference between the average density and the predetermined reference density of the liquid as an index for determining the suspended-substance concentration.

8) The apparatus of definition 7, further comprising:

low side plates 1 and 2 which are flat and arranged to be distant from each other in the depth direction of the stream flow so as to sandwich the straightner plate 1 (low pressure side) and straightner plate 2 (low pressure side); and
high side plates 1 and 2 which are flat and arranged to be distant from each other in the depth direction of the stream flow so as to sandwich the straightner plate 1 (high pressure side) and straightner plate 2 (high pressure side).

9) The apparatus of definition 8 having a sensor unit, wherein the straightner plate 1 (low pressure side), the straightner plate 2 (low pressure side), the detector pipe (low pressure side), the , the straightner plate 2 (high pressure side), the detector pipe (high pressure side), the differential pressure transmitter, the low side plate 1, the low side plate 2, the high side plate 1, and the high side plate 2 are fixed to the sensor unit so as to be integral therewith and the sensor unit is submerged in the stream flow.

10) An apparatus to be submerged in a stream flow in which suspended substances are mixed in order to measure the suspended-substance concentration of the liquid, comprising:

a straightner plate 1 (low pressure side) which is flat and submerged in the stream flow with the surfaces thereof positioned virtually perpendicular to the stream flow's surface, wherein a low side pressure hole 1 is formed on one side of the straightner plate 1 (low pressure side);
a detector pipe 1 (low pressure side) connected to the straightner plate 1 (low pressure side) so as to lead into the low side pressure hole 1;
a straightner plate 2 (low pressure side) which is flat and arranged to be distant from and opposite to one side of the straightner plate 1 (low pressure side) and a low side pressure hole 2 is formed on the side of the straightner plate 2 (low pressure side) opposite to the straightner plate 1 (low pressure side);
a detector pipe 2 (low pressure side) connected to the straightner plate 2 (low pressure side) so as to lead into the low side pressure hole 2;
a straightner plate 1 (high pressure side) which is flat and submerged in the stream flow with the surfaces thereof positioned virtually perpendicular to the stream flow's surface, while being made distant from the low-pressure side straightner plate in the depth direction of the stream flow, wherein a high side pressure hole 1 is formed on one side of the straightner plate 1 (high pressure side);
a detector pipe 1 (high pressure side) connected to the straightner plate 1 (high pressure side) so as to lead into the high side pressure hole 1;
a straightner plate 2 (high pressure side) which is flat and arranged to be distant from and opposite to one side of the straightner plate 1 (high pressure side) and a high side pressure hole 2 is formed on the side of the straightner plate 2 (high pressure side) opposite to the straightner plate 1 (high pressure side);
a detector pipe 2 (high pressure side) connected to the straightner plate 2 (high pressure side) so as to lead into the high side pressure hole 2;
a differential pressure transmitter for converting the pressure difference between the average pressure obtained by averaging pressures detected by the detector pipes 1 and 2 (low pressure side) and detector pipe 2 (low pressure side) and the average pressure obtained by averaging pressures detected by the detector pipe 1 (high pressure side) and detector pipe 2 (high pressure side) to an electric signal; and
a computing unit for calculating the average density of the liquid according to the output of the differential pressure transmitter and further calculating the difference between the average density and the predetermined reference density of the liquid as an index for determining the suspended-substance concentration.

11) The apparatus of definition 10, further comprising:

low side plates 1 and 2 which are flat and arranged to be distant from each other in the depth direction of the stream flow so as to sandwich the straightner plate 1 (low pressure side) and straightner plate 2 (low pressure side); and
high side plates 1 and 2 which are flat and arranged to be distant from each other in the depth direction of the stream flow so as to sandwich the straightner plate 1 (high pressure side) and straightner plate 2 (high pressure side).

12) The apparatus of definition 11 having a sensor unit, wherein the straightner plate 1 (low pressure side), the detector pipe 1 (low pressure side), the straightner plate 2 (low pressure side), the detector pipe 2 (low pressure side), the straightner plate 1 (high pressure side), the detector pipe 1 (high pressure side), the straightner plate 2 (high pressure side), the detector pipe 2 (high pressure side), the differential pressure transmitter, the low side plate 1, the low side plate 2, the high side plate 1, and the high side plate 2 are fixed to the sensor unit so as to be integral therewith and the sensor unit is submerged in the stream flow.

13) An apparatus to be submerged in a stream flow in which suspended substances are mixed in order to measure the suspended-substance concentration of the stream flow, comprising:

a low side straightner pipe which is tubular and submerged in the stream flow with the central axis thereof positioned virtually parallel with the stream flow's surface, wherein a low side pressure hole leading inside the low side straightner pipe is formed in the low side straightner pipe;

a detector pipe (low pressure side) connected to the low side straightner pipe so as to lead into the low side pressure hole;

a high side straightner pipe which is tubular and submerged in the stream flow with the central axis thereof positioned virtually parallel with the stream flow's surface, while being made distant from the low side straightner pipe in the depth direction of the stream flow, and wherein a high-side pressure hole leading inside the high side straightner pipe is formed;

a detector pipe (high pressure side) connected to the high side straightner pipe so as to lead into the high-side pressure hole;

a differential pressure transmitter for converting the pressure difference between pressures detected by the detector pipe (low pressure side) and detector pipe (high-pressure side) to an electric signal; and

a computing unit for calculating the average density of the liquid according to the output of the differential pressure transmitter and further calculating the difference between the average density and the predetermined reference density of the liquid as an index for determining the suspended-substance concentration.

14) The apparatus of definition 13, further comprising:

low pressure side plates 1 and 2 which are flat and arranged to be distant from each other in the depth direction of the stream flow so as to sandwich the low side straightner pipe; and

high side plates 1 and 2 which are flat and arranged to be distant from each other in the depth direction of the stream flow so as to sandwich the high side straightner pipes.

15) The apparatus of definition 14 having a sensor unit, wherein the low side straightner pipe, the detector pipe (low pressure side), the high side straightner pipe, the detector pipe (high pressure side), the differential pressure transmitter, the low side plate 1, the low side plate 2, the high side plate 1, and the high side plate 2 are fixed to the sensor unit so as to be integral therewith and the sensor unit is submerged in the stream flow.

16) An apparatus to be submerged in a stream flow in which suspended substances are mixed in order to measure the suspended-substance concentration of the liquid, comprising:

a low side straightner pipe which is tubular and submerged in the stream flow with the central axis thereof positioned virtually parallel with the stream flow's surface and wherein a low side pressure hole 1 leading inside the low side straightner pipe and a low side pressure hole 2 positioned opposite to the low side pressure hole 1 and also leading inside the low side straightner pipe are formed;

a detector pipe 1 (low pressure side) connected to the low side straightner pipe so as to lead into the low side pressure hole 1;

a detector pipe 2 (low pressure side) connected to the low side straightner pipe so as to lead into the low side pressure hole 2,

a high side straightner pipe which is tubular and submerged in the stream flow with the central axis thereof positioned virtually parallel with the stream flow's surface, while being made distant from the low side straightner pipe in the depth direction of the stream flow, and wherein a high side pressure hole 1 leading inside the high side straightner pipe and a high side pressure hole 2 positioned opposite to the high side pressure hole 1 and also leading inside the high side straightner pipe are formed;

a detector pipe 1 (high pressure side) connected to the high side straightner pipe so as to lead into the high side pressure hole 1;

a detector pipe 2 (high pressure side) connected to the high side straightner pipe so as to lead into the high side pressure hole 2;

a differential pressure transmitter for converting the pressure difference between the average pressure obtained by averaging pressures detected by the detector pipe 1 (low pressure side) and detector pipe 2 (low pressure side) and the average pressure obtained by averaging pressures detected by the detector pipe 1 (high pressure side) and detector pipe 2 (high pressure side) to an electric signal; and

a computing unit for calculating the average density of the liquid according to the output of the differential pressure transmitter and further calculating the difference between the average density and the predetermined reference density of the liquid as an index for determining the suspended-substance concentration.

17) The apparatus of definition 16, further comprising:

low side plates 1 and 2 which are flat and arranged to be distant from each other in the depth direction of the stream flow so as to sandwich the low side straightner pipe; and
high side plates 1 and 2 which are flat and arranged to be distant from each other in the depth direction of the stream flow so as to sandwich the high side straightner pipe.

18) The apparatus of definition 17 having a sensor unit, wherein the low side straightner pipe, the detector pipe 1 (low pressure side), the detector pipe 2 (low pressure side), the high side straightner pipe, the detector pipe 1 (high pressure side), the detector pipe 2 (high pressure side), the differential pressure transmitter, the low side plate 1, the low side plate 2, the high side plate 1, and the high side plate 2 are fixed to the sensor unit so as to be integral therewith and the sensor unit is submerged in the stream flow.

19) An apparatus to be submerged in a stream flow in which suspended substances are mixed in order to measure the suspended-substance concentration of the liquid, comprising:

straightner plate 1 (low pressure side) and straightner plate 2 (low pressure side) which are flat and submerged in the stream flow with the surfaces thereof positioned virtually perpendicular to the stream flow's surface, while being arranged to be distant from and opposite to each other;
a low side diaphragm seal provided on either of the opposing surfaces of the straightner plate 1 (low pressure side) and straightner plate 2 (low pressure side);
straightner plate 1 (low pressure side) and straightner plate 2 (low pressure side)which are flat and submerged in the depth direction of the stream flow distantly from the straightner plate 1 (low pressure side) and straightner plate 2 (low pressure side), with the surfaces thereof positioned virtually perpendicular to the stream flow's surface, while being arranged to be distant from and opposite to each other;
a high side diaphragm seal provided on either of the opposing surfaces of the straightner plate 1 (high pressure side) and straightner plate 2 (high pressure side);
a differential pressure transmitter for converting the difference between pressures detected by the low side and high side diaphragm seals to an electric signal; and
a computing unit for calculating the average density of the liquid according to the output of the differential pressure transmitter and further calculating the difference between the average density and the predetermined reference density of the liquid as an index for determining the suspended-substance concentration.

20) The apparatus of definition 19, further comprising:

low side plates 1 and 2 which are flat and arranged to be distant from each other in the depth direction of the stream flow so as to sandwich the straightner plate 1 (low pressure side) and straightner plate 2 (low pressure side); and
high side plates 1 and 2 which are flat and arranged to be distant from each other in the depth direction of the stream flow so as to sandwich the straightner plate 1 (high pressure side) and straightner plate 2 (high pressure side).

21) The apparatus of definition 20 having a sensor unit, wherein the straightner plate 1 (low pressure side), the straightner plate 2 (low pressure side), the low side diaphragm seal, the straightner plate **1** (high pressure side), the straightner plate 2 (high pressure side), the high side diaphragm seal, the differential pressure transmitter, the low side plate 1, the low side plate 2, the high side plate 1, and the high side plate 2 are fixed to the sensor unit so as to be integral therewith and the sensor unit is submerged in the stream flow.

22) The apparatus of any of definitions 6, 9, 12, 15, 18 and 21, further comprising a shell designed to house the sensor unit and provided with stream inlet outlet holes for the stream flow to pass through.

## BRIEF DESCRIPTION OF THE DRAWINGS

FIG. 1 is a schematic view explaining a method for measuring suspended-substance concentrations according to the present invention.

FIG. 2 is a graphic view showing a change in the density of water with temperature and the temperature characteristic of a differential pressure transmitter.

FIG. 3 is a schematic view showing the configuration of a first embodiment according to the present invention.

FIG. 4 is a schematic view showing the configurations of the main components of the apparatus for measuring suspended-substance concentrations illustrated in FIG. 3.

FIG. 5 is a schematic view showing the configuration of a second embodiment according to the present invention.

FIG. 6 is a schematic view showing the configurations of the main components of the apparatus for measuring suspended-substance concentrations illustrated in FIG. 5.

FIG. 7 is a schematic view showing the configuration of a third embodiment according to the present invention.

FIG. 8 is a schematic view showing the configuration of an apparatus for measuring suspended-substance concentrations according to the present invention, wherein peripheral equipment is connected to the apparatus.

FIG. 9 is a schematic view showing the configuration of a shell wherein the sensor unit shown in FIG. 3 is housed.

## DETAILED DESCRIPTION OF THE PREFERRED EMBODIMENTS

Preferred embodiments of the present invention will now be described in detail with reference to the accompanying drawings.

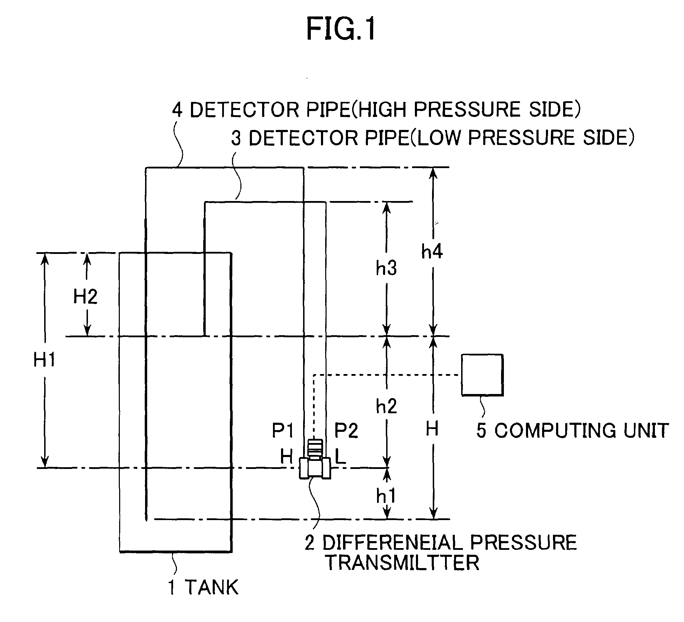

FIG. 1 is a schematic view explaining a method for measuring suspended-substance concentrations according to the present invention.

In FIG. 1, the numeral 1 indicates a tank corresponding to a dam or river wherein suspended-substance concentrations are measured and the tank is filled with water.

The numeral 2 indicates a differential pressure transmitter provided with a diaphragm (not shown in the figure) which, once given inputs of high and low pressures, detects the difference between the pressures. The differential pressure transmitter converts the detected pressure difference to an electric signal and outputs the signal. Connected to the input stage of the differential pressure transmitter (2) are a detector pipe (low pressure side) (3) and a detector pipe (high pressure side) (4) inserted to given depths of the tank. The tip of the detector pipe (high pressure side) (4) is inserted into the tank (1) deeper than that of the detector pipe (low pressure side) (3) by as much as a distance H. In addition, the interiors of the detector pipe (low pressure side) (3) and detector pipe (high pressure side) (4) are either water-sealed or water-purged.

The numeral 5 indicates a computing unit connected to the differential pressure transmitter (2) and is given the input of an output signal provided by the differential pressure transmitter (2).

In this method of measurement, a high pressure P1 and a low pressure P2 applied to the differential pressure transmitter (2) are respectively represented by equations 1 and 2 given below:

$$P1 = \rho H1 - \rho 0(H1 + h1) + \rho 0(h1 + H1 + H - h4) + P0 \tag{1}$$

$$P2 = \rho H2 - \rho 0(H2 + h2) + \rho 0(h2 + H1 + H - h3) + P0 \tag{2}$$

where

$\rho$ is the average density of water between the tips of the detector pipe (high pressure side) and detector pipe (low pressure side) in the tank;

$\rho 0$ is the density of water sealed inside the detector pipe (high pressure side) and detector pipe (low pressure side);

H is the distance from the tip of the detector pipe (high pressure side) to the tip of the detector pipe (low pressure side);

H1 is the distance from the center point of the diaphragm of the differential pressure transmitter to the top end of the tank;

H2 is the distance from the tip of the detector pipe (low pressure side) to the top end of the tank;

h1 is the distance from the tip of the detector pipe (high pressure side) to the center point of the diaphragm of the differential pressure transmitter;

h2 is the distance from the tip of the detector pipe (low pressure side) to the center point of the diaphragm of the differential pressure transmitter;

h3 is the distance from the top end to the tip of the detector pipe (low pressure side);

h4 is the distance from the top end of the detector pipe (high pressure side) to the tip of the detector pipe (low pressure side); and

P0 is the atmospheric pressure.

Since H1 - H2 = H assuming h3 = h4, the differential pressure transmitter (2) detects the pressure difference (P1 - P2) given by equation 3 below by means of the diaphragm, according to equations 1 and 2. The differential pressure transmitter (2) then converts the pressure difference to an electric signal.

$$P1 - P2 = H (\rho - \rho 0) \tag{3}$$

Since H and $\rho 0$ in equation 3 are previously known, the computing unit (5) calculates the average density $\rho$, given an output signal (pressure difference) from the differential pressure transmitter (2).

The computing unit (5) previously stores the values of H and $\rho 0$, as well as the reference density of water in which no suspended substance is mixed, as known values. Thus, the computing unit (5) calculates the difference between the evaluated average density $\rho$ of water and the stored reference density of water to output the difference as an index for determining suspended-substance concentrations.

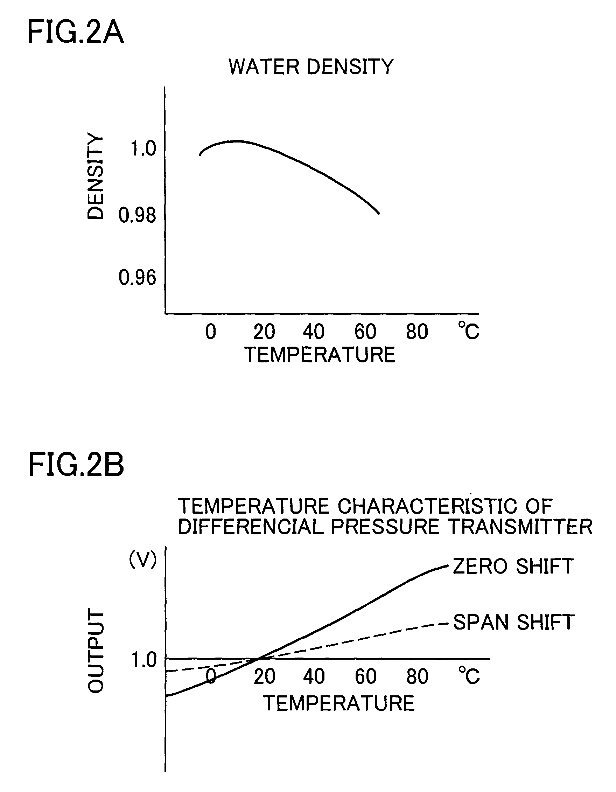

It should be noted here that the density of water changes according to the temperature thereof. For example, there will be a density change equivalent to an approximately 250 ppm change in a suspended-substance concentration for a temperature change of $1°C$. Accordingly, it is possible to measure suspended-substance concentrations more precisely, by measuring a temperature inside the tank (1) using a thermometer (not shown in the figure), and then correcting the given density according to a previously obtained relationship between the temperature and density of water such as the one shown in FIG. 2a. This temperature-based correction may be made using the computing unit (5).

As described earlier, there is a case where the detector pipe (low pressure side) (3) provided as a low-pressure detector and the detector pipe (high pressure side) (4) provided as a high-pressure detector are sealed using water in which no suspended substance is mixed as a sealing fluid. In this case, both the liquid with which the tank (1) is filled and the sealing fluid are water. This means temperature-driven changes in the density of water within the tank (1) and in the density of water sealed inside the detector pipe (low pressure side) and detector pipe (high pressure side) are cancelled mutually. Consequently, there is no need for making temperature-based density corrections.

The above-mentioned case is based on the fact that if the detector pipe (low pressure side) (3) and detector pipe (high pressure side) (4) are sealed with the liquid which is the same as the liquid under test and with which no suspended substance is mixed, then temperature-driven density changes in the liquids are cancelled mutually. Now this logic is explained in detail by referring to FIG. 1.

The high pressure P1 and low pressure P2 applied to the differential pressure transmitter (2) and the average density $\rho$ of water are represented by equations 4, 5 and 6 below, respectively.

$$P1 = P0 + \rho H - \rho 0 h1 = P0 + (\rho 0 + \Delta\rho_s)H - \rho 0 h1 \tag{4}$$

$$P2 = P0 + \rho 0 h2 \tag{5}$$

$$\rho = \rho 0 + \Delta\rho_s \tag{6}$$

where $\Delta\rho_s$ is a density change due to suspended substances in water within the tank.

Since H = h1 + h2, the pressure difference (P1 - P2) is represented by equation 7 below.

$$P1 - P2 = \rho H - \rho 0(h1 + h2) = \Delta\rho_s H \tag{7}$$

Consequently, the density $\rho 0$ is cancelled from the equation and only a density change due to suspended substances in water within the tank is detected.

Note here that an output error, such as a zero shift or a span shift, occurs in the differential pressure transmitter (2) due to a change in the ambient temperature. Accordingly, it is possible to measure suspended-substance concentrations more precisely, by measuring the ambient temperature of the differential pressure transmitter (2) using a thermometer (not shown in the figure), and then correcting the output of the differential pressure transmitter (2) according to such previously obtained temperature characteristic thereof as those shown in FIG. 2b. This temperature-based correction may be made using the computing unit (5).

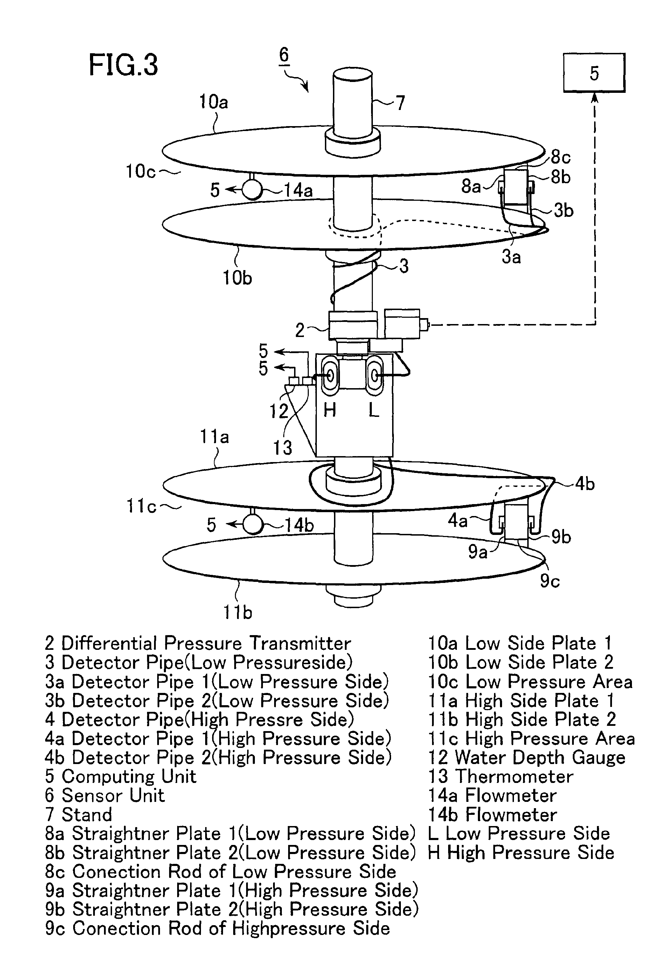

FIG. 3 is a schematic view showing the configuration of a first embodiment according to the present invention.

In FIG. 3, the numeral 6 indicates a sensor unit to which a stand (7), a straightner plate 1 (low pressure side) (8a), a straightner plate 2 (low pressure side) (8b), a detector pipe 1 (low pressure side) (3a), a detector pipe 2 (low pressure side) (3b), a detector pipe (low pressure side) (3), a straightner plate 1 (high pressure side) (9a), a straightner plate 2 (high pressure side) (9b), a detector pipe 1 (high pressure side) (4a), a detector pipe 2 (high pressure side) (4b), a detector pipe (high pressure side) 4, a differential pressure transmitter (2), a low side plate 1 (10a), a low side plate 2 (10b), a high side plate 1 (11a), and a high side plate 2 (lib) are fixed so as to be integral with the sensor unit and the sensor unit is submerged in the stream flow of a dam, river or the like.

Fixed onto the upper section of the stand (7) are the low side plates 1 (10a) and 2 (10b) which are circular, for example, and provided as first ripple removal means, wherein the plates 1 (10a) and 2 (10b) are separated at a given distance from each other with the stand (7) penetrating through the center points thereof. A low pressure area 10c is thus formed in the space between the low side plates 1 (10a) and 2 (10b). In addition, the high side plates 1 (11a) and 2 (11b), which are also circular, for example, and provided as second ripple removal means, are fixed onto the stand (7) at a position downward (in the depth direction of the stream flow) from the low side plates 1 (10a) and 2 (10b), wherein the plates 1 (11a) and 2 (11b) are separated at a given distance from each other with the stand (7) penetrating through the center points thereof. A high pressure area 11c is thus formed in a space between the high side plates 1 (11a) and 2 (11b).

Fixed between the high side plate 1 (11a) and the low side plate 2 (10b) on the stand (7) is the differential pressure transmitter (2). A water depth gauge (12) and a thermometer (13) are fixed in the vicinity of the differential pressure transmitter (2).

A flowmeter 14a is fixed onto the low side plate 1 (10a) so as to be positioned in the low pressure area 10c. Likewise, a flowmeter 14b is fixed onto the high side plate 1 (11a) so as to be positioned in the high pressure area 11c.

The straightner plate 1 (low pressure side) (8a) and straightner plate 2 (low pressure side) (8b), which are also circular, for example, and provided as first ripple removal means, are connected to each other with a connection rod (8c) so as to be opposite to each other and positioned in the low pressure area 10c, both being fixed onto the low side plate 1 (10a). More specifically, the straightner plate 1 (low pressure side) (8a) and straightner plate 2 (low pressure side) (8b) are arranged so that the surfaces thereof are virtually perpendicular to those of the low side plates 1 (10a) and 2 (10b).

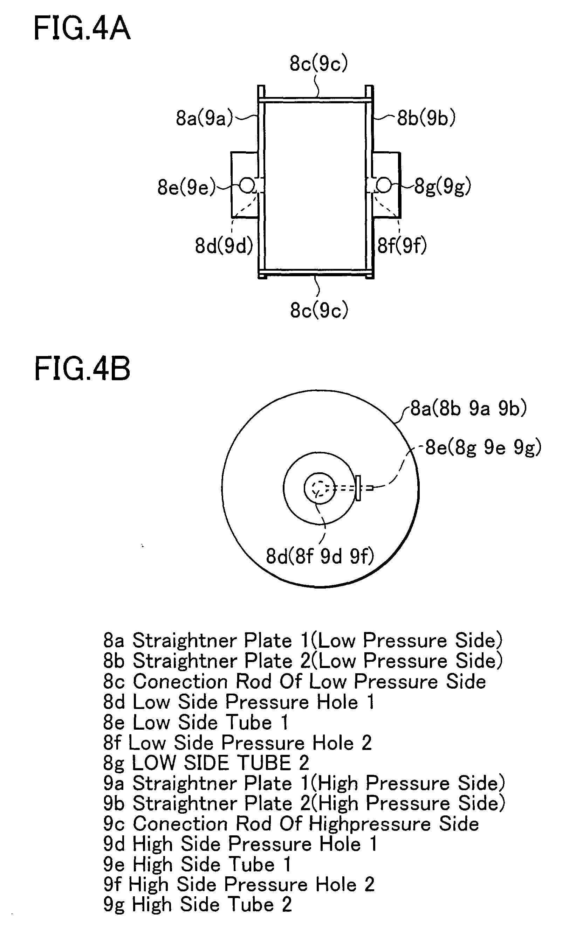

FIG. 4a is a side view showing the way the straightner plate 1 (low pressure side) (8a) and straightner plate 2 (low pressure side) (8b) are connected to each other, whereas FIG. 4b is a plan view of the straightner plate 1 (low pressure side) (8a) (or straightner plate 2 (low pressure side) (8b)).

In FIGS. 4a and 4b, a low side pressure hole 1 (8d) is formed in the straightner plate 1 (high pressure side) (8a) to introduce the pressure of water in contact with one side thereof opposite to the straightner plate 2 (low pressure side) (8b) when the straightner plate 1 (low pressure side) (8a) is submerged in a stream flow such as water. A low side tube 1 (8e) leading into the low side pressure hole 1 (8d) is connected to the straightner plate 1 (low pressure side) (8a). Additionally, as shown in FIG. 3, the tip of the detector pipe 1 (low pressure side) (3a) is connected to the low side tube 1 (8e) so as to lead into the low side pressure hole 1 (8d).

A low side pressure hole 2 (8f) is formed in the straightner plate 2 (low pressure side) (8b) in a position virtually level with the low side pressure hole 1 (8d), in order to introduce the pressure of water in contact with one side of the straightner plate 2 (low pressure side) (8b) opposite to the straightner plate 1 (low pressure side) (8a). A low side tube 2 (8g) leading into the low side pressure hole 2 (8f) is connected to the straightner plate 2 (low pressure side) (8b). Additionally, as shown in FIG. 3, the tip of the detector pipe 2 (low pressure side) (3b) is connected to the low side tube 2 (8g) so as to lead into the low side pressure hole 2 (8f).

In FIG. 3, the detector pipe 1 (low pressure side) (3a) and detector pipe 2 (high pressure side) (3b) are made to join into a single detector pipe, i.e., the detector pipe (low pressure side) (3). The detector pipe (low pressure side) (3) is connected to the low pressure side L of the differential pressure transmitter (2). At this point, the detector pipe 1 (low pressure side) (3a), detector pipe 2 (low pressure side) (3b) and detector pipe (low pressure side) (3) are sealed with a sealing fluid, such as water.

The high-pressure side of the sensor unit (6) is configured to be similar to the low-pressure side thereof. More specifically, straightner plate 1 (low pressure side) (9a) and straightner plate 2 (low pressure side) (9b), which are circular, for example, and provided as second ripple removal means, are connected to each other with a connection rod (9c) so as to be opposite to each other and positioned in the high pressure area 11c, both being fixed onto the high side plate 1 (11a). Yet more specifically, the straightner plate 1 (low pressure side) (9a) and straightner plate 2 (low pressure side) (9b) are arranged so that the surfaces thereof are virtually perpendicular to those of the high side plates 1 (11a) and 2 (11b).

The straightner plate 1 (low pressure side) (9a) and straightner plate 2 (low pressure side) (9b) are structurally the same as the straightner plate 1 (low pressure side) (8a) and straightner plate 2 (low pressure side) (8b) shown in FIGS. 4a and 4b. That is, a high side pressure hole 1 (9d) is formed in the straightner plate 1 (high pressure side) (9a) to introduce the pressure of water in contact with one side thereof opposite to the straightner plate 2 (high pressure side) (9b) when the straightner plate 1 (high pressure side) (9a) is submerged in the liquid of a stream flow such as water. A high side tube 1 (9e) leading into the high side pressure hole 1 (9d) is connected to the straightner plate 1 (high pressure side) (9a). Additionally, as shown in FIG. 3, the tip of the detector pipe 1 (high pressure side) (4a) is connected to the high side tube 1 (9e) so as to lead into the high side pressure hole 1 (9d).

A high side pressure hole 2 (9f) is formed in the straightner plate 2 (high pressure side) (9b) in a position virtually level with the high side pressure hole 1 (9d), in order to introduce the pressure of water in contact with one side of the straightner plate 2 (high pressure side) (9b) opposite to the straightner plate 1 (high pressure side) (9a). A high side tube 2 (9g) leading into the high side pressure hole 2 (9f) is connected to the straightner plate 2 (high pressure side) (9b). Additionally, as shown in FIG. 3, the tip of the detector pipe 2 (high pressure side) (4b) is connected to the high side tube 2 (9g) so as to lead into the high side pressure hole 2 (9f).

The detector pipe 1 (high pressure side) (4a) and detector pipe 2 (high pressure side) (4b) are made to join into a single detector pipe, i.e., the detector pipe (high pressure side) 4. The detector pipe (high pressure side) (4) is connected to the high pressure side H of the differential pressure transmitter (2). At this point, the detector pipe 1 (high pressure side) (4a), detector pipe 2 (high pressure side) (4b) and detector pipe (high pressure side) (4) are sealed with a sealing fluid, such as water.

Now, the behavior of the apparatus for measuring suspended-substance concentrations shown in FIG. 3 is explained in detail.

Firstly, the sensor unit (6) is submerged in the liquid of a dam, river or the like. If the liquid is running, the sensor unit (6) is oriented and submerged therein so that the liquid flows between the straightner plate 1 (low pressure side) (8a) and straightner plate 2 (low pressure side) (8b) and between the straightner plate 1 (low pressure side) (9a) and straightner plate 2 (low pressure side) (9b).

Consequently, the pressure of liquid flowing between the straightner plate 1 (low pressure side) (8a) and straightner plate 2 (low pressure side) (8b) is introduced through the low side pressure hole 1 (8d) into the detector pipe 1 (low pressure side) (3a), thus pressurizing the fluid sealed therein. The pressure is also introduced through the low side pressure hole 2 (8f) into the detector pipe 2 (low pressure side) (3b). Since the detector pipe 1 (low pressure side) (3a) and detector pipe 2 (low pressure side) (3b) are made to join into the detector pipe (low pressure side) (3), the pressures introduced to the two pipes 1 (3a) and 2 (3b) are averaged and the resulting average pressure is introduced through the detector pipe (low pressure side) (3) to the low pressure side L of the differential pressure transmitter (2). Likewise, pressures introduced to the detector pipe 1 (high pressure side) (4a) and detector pipe 2 (high pressure side) (4b) are averaged and the resulting average pressure is introduced through the detector pipe (high pressure side) (4) to the high pressure side H of the differential pressure transmitter (2). Since the low and high pressures introduced to the differential pressure transmitter (2) are averaged pressures, any error included in the measured pressure is minimal.

In the above-noted process, the straightner plate 1 (low pressure side) (8a) and straightner plate 2 (low pressure side) (8b) remove ripples and thereby streamline the flow of liquid by limiting the region through which the liquid flows, so that an influence exerted upon pressure detection by horizontal waves, in particular, produced in the direction perpendicular to the surfaces of the straightner plate 1 (low pressure side) (8a) and straightner plate 2 (low pressure side) (8b) is reduced.

Similarly, the low side plates 1 (10a) and 2 (10b) remove ripples and thereby streamline the flow of the liquid by limiting the region through which the liquid flows to the area 10c only, so that an influence exerted upon pressure detection by vertical waves, in particular, produced in the depth direction of the liquid is reduced.

Effects of streamlining the liquid's flow brought about by the straightner plate 1 (low pressure side) (9a) and straightner plate 2 (low pressure side) (9b) and by the high side plates 1 (11a) and 2 (11b) are the same as those produced on the low-pressure side of the sensor unit (6) as described above.

The differential pressure transmitter (2) detects the difference between the low and high pressures applied thereto by means of the diaphragm built therein (not shown in the figure) and converts the difference to an electric signal.

According to the output of the differential pressure transmitter (2), the computing unit (5) calculates the average density of liquid between the low side pressure hole 1 (8d) (or low side pressure hole 2 (8f)) and the high side pressure hole 1 (9d) (or high side pressure hole 2 (9f)). Then, the computing unit (5) calculates the difference between the average density thus evaluated and the previously evaluated and stored reference density of the liquid as an index for determining suspended-substance concentrations.

Additionally, depth and pressure measured with the water depth gauge 12, temperature measured with the thermometer (13), and flow rates measured with the flowmeters 14a and 14b are transmitted to the computing unit (5), whereby the computing unit (5) performs those corrective calculations which are routinely made with respect to output values provided by the differential pressure transmitter (2).

More specifically, corrections are made to the measured density and the output of the differential pressure transmitter (2), according to previously obtained data on a change in the density of water with temperature and the temperature characteristic of the differential pressure transmitter (2), such as those shown in FIGS. 2a and 2b. The values measured as described above are also utilized as reference data representing conditions for measuring suspended-substance concentrations.

As described in the first embodiment shown in FIG. 3, there is a case where both a liquid under test containing suspended substances and a liquid with which the detector pipe (low pressure side) (3) and detector pipe (high pressure side) (4) are sealed and which contains no suspended substance are water. In this case, there is no need for making temperature-based density corrections since temperature-driven changes in the density of water are cancelled, as explained earlier.

It should be noted here that if the tolerance of error permitted for the measured suspended-substance concentration is relatively large, a low side pressure hole may only be formed in either the straightner plate 1 (low pressure side) (8a) or the straightner plate 2 (low pressure side) (8b). Then, the detector pipe (low pressure side) (3) may be connected to either the straightner plate 1 (low pressure side) (8a) or the straightner plate 2 (low pressure side) (8b) so as to lead into the low side pressure hole. Likewise, a high-side pressure hole may only be formed in either the straightner plate 1 (high pressure side) (9a) or the straightner plate 2 (high pressure side) (9b). Then, the detector pipe (high pressure side) (4) may be connected to either the straightner plate 1 (high pressure side) (9a) or the straightner plate 2 (high pressure side) (9b) so as to lead into the high-side pressure hole.

In such an apparatus for measuring suspended-substance concentrations as described above, the pressure difference between two points distantly located in the depth direction of a liquid is detected using the differential pressure transmitter (2) without resort to optical measurement means, the average liquid density between the two points is calculated according to the detected pressure difference, and the difference between the average density and the reference density of the liquid is used as an index for determining suspended-substance concentrations. Consequently, it is possible to measure the concentration precisely, continuously, and in real time, while keeping the sensor unit (6) submerged for a long period of time. Thus, the work of maintaining and controlling the apparatus can be reduced only to such tasks as the zero-point adjustment of the differential pressure transmitter (2). Additionally, since the measuring range is dependent on the measurement accuracy of the differential pressure transmitter (2), it is also possible to measure the concentration over a broad range, for example, as wide as from 30 ppm to 70000 ppm.

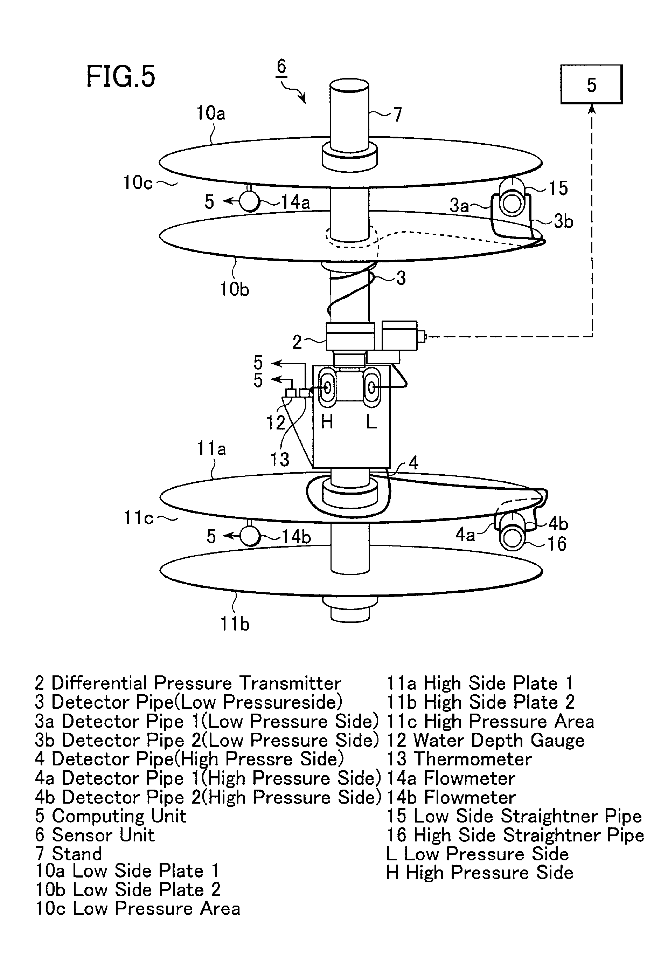

FIG. 5 is a schematic view showing the configuration of a second embodiment according to the present invention.

In FIG. 5, the straightner plate 1 (low pressure side) (8a) and straightner plate 2 (low pressure side) (8b) shown in the apparatus for measuring suspended-substance concentrations illustrated in FIG. 3 are replaced with a low side straightner pipe (15) provided as first ripple removal means. Likewise, the straightner plate 1 (low pressure side) (9a) and straightner plate 2 (low pressure side) (9b) are replaced with a high side straightner pipe (16) provided as second ripple removal means. Accordingly, components identical to those of FIG. 3 are referenced alike and excluded from the explanation as necessary.

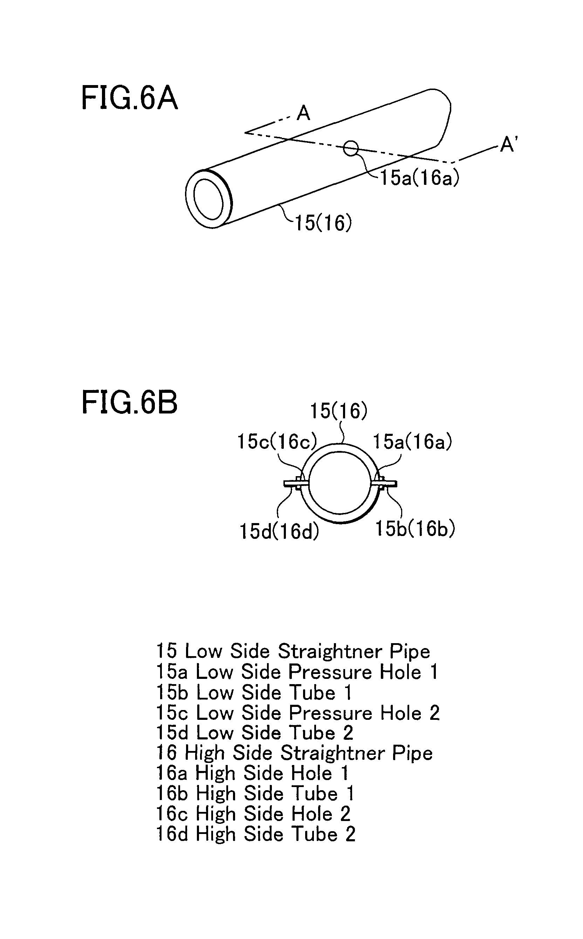

FIG. 6a is a perspective view showing the configuration of the low side straightner pipe (15) (or high side straightner pipe (16)), whereas FIG. 6b is a schematic cross-section thereof as viewed from the line AA'.

In FIGS. 6a and 6b, a low side pressure hole 1 (15a) is formed in the low side straightner pipe (15) to introduce the pressure of water in contact with the inside thereof when the low side straightner pipe (15) is submerged in water. A low side tube 1 (15b) leading into the low side pressure hole 1 (15a) is connected to the low side straightner pipe (15). Additionally, as shown in FIG. 5, the tip of the detector pipe 1 (low pressure side) (3a) is connected to the low side tube 1 (15b) so as to lead into the low side pressure hole 1 (15a).

A low side pressure hole 2 (15c) leading inside the low side straightner pipe (15) is formed therein in a position opposite to the low side pressure hole 1 (15a), wherein a low side tube 2 (15d) leading into the low side pressure hole 2 (15c) is connected to the low side straightner pipe (15). Additionally, as shown in FIG. 5, the tip of the detector pipe 2 (low pressure side) (3b) is connected to the low side tube 2 (15d) so as to lead into the low side pressure hole 2 (15c).

The high side straightner pipe (16) is structurally the same as the low side straightner pipe (15) shown in FIGS. 6a and 6b. That is, a high side pressure hole 1 (16a) is formed in the high side straightner pipe (16) to introduce the pressure of water in contact with the inside thereof when the high side straightner pipe (16) is submerged in water. A high side tube 1 (16b) leading into the high side pressure hole 1 (16a) is connected to the high side straightner pipe (16). Additionally, as shown in FIG. 5, the tip of the detector pipe 1 (high pressure side) (4a) is connected to the high side tube 1 (16b) so as to lead into the high side pressure hole 1 (16a).

A high side pressure hole 2 (16c) leading inside the high side straightner pipe (16) is formed therein in a position opposite to the high side pressure hole 1 (16a), wherein a low side tube 2 (16d) leading into the high side pressure hole 2 (16c) is connected to the high side straightner pipe (15). Additionally, as shown in FIG. 5, the tip of the detector pipe 2 (high pressure side) (4b) is connected to the high side tube 2 (16d) so as to lead into the high side pressure hole 2 (16c).

During measurement, the sensor unit (6) is submerged in the liquid of a dam, river or the like. If the liquid is running, the sensor unit (6) is oriented and submerged therein so that the liquid flows through the low side straightner pipe (15) and high side straightner pipe (16).

In the above-noted process, the low side straightner pipe (15) (high side straightner pipe (16)) removes ripples and thereby streamlines the flow of liquid by limiting the region through which the liquid flows, so that influences exerted upon pressure detection by horizontal and vertical waves produced in the directions perpendicular to and parallel with the cross-section of the low side straightner pipe (15) (high side straightner pipe (16)) are reduced.

It should be noted here that if the tolerance of error permitted for the measured suspended-substance concentration is relatively large, as with the first embodiment of FIG. 3, only one low side pressure hole may be formed in the low side straightner pipe (15). Then, the detector pipe (low pressure side) (3) may be connected to low side straightner pipe (15) so as to lead into the low side pressure hole. Likewise, only one high-side pressure hole may be formed in the high side straightner pipe (16). Then, the detector pipe (high pressure side) (4) may be connected to the high side straightner pipe (16) so as to lead into the high-side pressure hole.

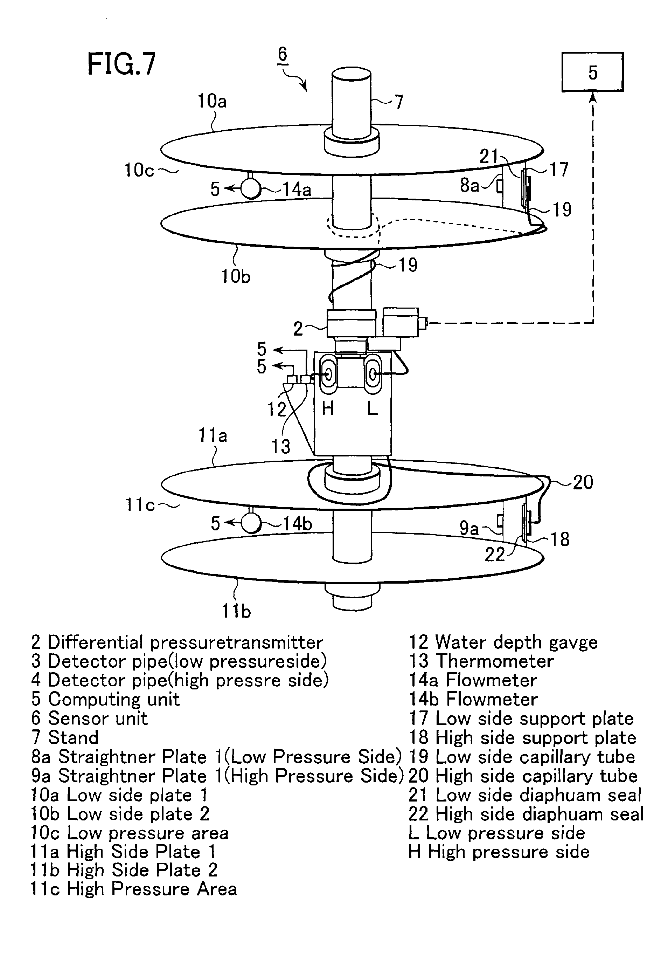

FIG. 7 is a schematic view showing the configuration of a third embodiment according to the present invention.

In FIG. 7, low side and high side support plates 17 and 18 are provided in place of the straightner plate 2 (low pressure side) (8b) and straightner plate 2 (high pressure side) (9b), respectively, shown in the apparatus for measuring suspended-substance concentrations illustrated in FIG. 3. Likewise, the detector pipe (low pressure side) (3) and detector pipe (high pressure side) (4) are replaced with low side and high side capillary tubes 19 and 20, respectively. Accordingly, components identical to those of FIG. 3 are referenced alike and excluded from the explanation as necessary.

It should be noted here that the low side and high side support plates 17 and 18 may be provided in place of the straightner plate 1 (low pressure side) (8a) and straightner plate 1 (high pressure side) (9a), respectively, shown in the apparatus for measuring suspended-substance concentrations illustrated in FIG. 3.

Fixed onto one side of the low side support plate (17) opposite to the straightner plate 1 (low pressure side) (8a) is a low side diaphragm seal (21), wherein the low side capillary tube (19) is fixed to the low side support plate (17) so as to lead into the inside thereof. The low side support plate (17) and low side capillary tube (19) are sealed with a sealing fluid, and a pressure detected by the low side diaphragm seal (21) is input through the low side capillary tube (19) to the differential pressure transmitter (2).

Similarly, a high side diaphragm seal (22) is fixed onto one side of the high side support plate (18) opposite to the straightner plate 1 (high pressure side) (9a), wherein the high side capillary tube (20) is fixed to the high side support plate (18) so as to lead into the inside thereof. The high side support plate (18) and high side capillary tube (20) are sealed with a sealing fluid, and a pressure detected by the high side diaphragm seal (22) is input through the high side capillary tube (20) to the differential pressure transmitter (2).

Since the low side support plate (17) functions as a straightner plate 2 (low pressure side) and the high side support plate (18) functions as a straightner plate 2 (high pressure side), the low side and high side support plates 17 and 18 may be used in combination with the straightner plate 1 (low pressure side) (8a) and the straightner plate 1 (high pressure side) (9a), respectively. Consequently, the combination of the low side support plate (17) and straightner plate 1 (low pressure side) (8a) removes ripples and thereby streamlines the flow of liquid by limiting the region through which the liquid flows, so that an influence exerted upon pressure detection by horizontal waves, in particular, produced in the direction perpendicular to the surfaces of the straightner plate 1 (low pressure side) (8a) and low side support plate (17) (straightner plate 1 (high pressure side) (9a) and high side support plate (18)) is reduced.

Since the pressure detection units of such an apparatus for measuring suspended-substance concentrations as described above are diaphragm seals, the apparatus features higher levels of noise immunity performance against such suspended substances as earth and sand or dirt, compared with apparatus based on pressure detection pipes. Thus, the apparatus is suited for measurement of suspended-substance concentrations in the depths of a dam.

Note that in the explanation of FIGS. 3 to 7, reference was made only to a case where the sensor unit (6) is submerged in a liquid. Alternatively, if it is not possible to submerge the sensor unit (6) in the liquid under test, however, because the liquid level is too low or for any other reason, the liquid may be sampled into a tank and the sensor unit (6) submerged therein. This strategy makes it possible to precisely measure the suspended-substance concentration of the sampled liquid since there is no influence of ripples.

Additionally, there is a case where a sealing fluid with which the low side and high side capillary tubes 19 and 20 are sealed and which contains no suspended substance, and a liquid under test containing suspended substances, are of the same type (water, for example). In this case, there is no need for making temperature-based density corrections, as explained earlier. If the sealing fluid is silicone oil, for example, temperature-based density corrections may be made for the liquid under test (water, for example) and the silicone oil. This strategy will enable the apparatus to measure suspended-substance concentrations more precisely.

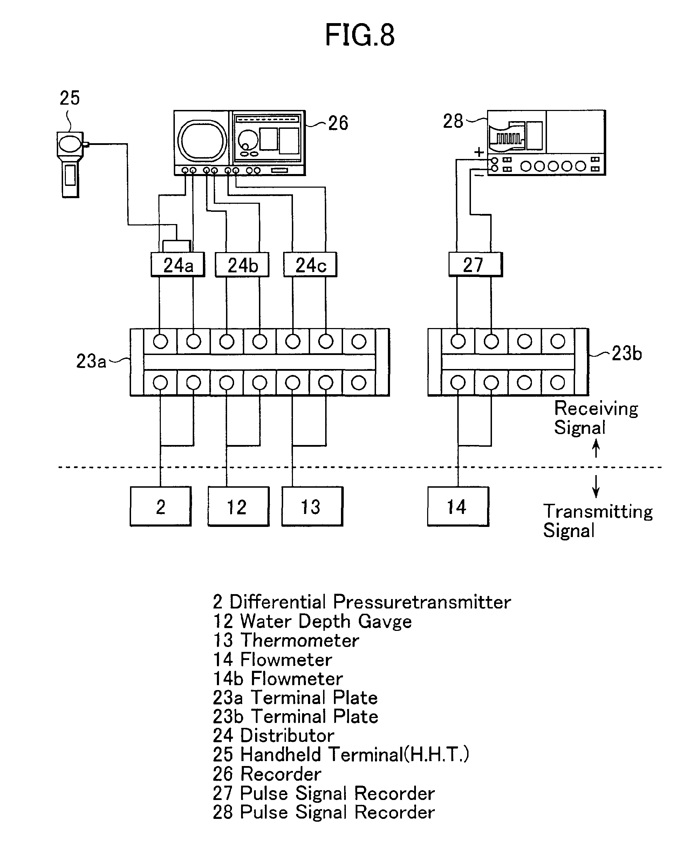

FIG. 8 is a schematic view showing the configuration of an apparatus for measuring suspended-substance concentrations according to the present invention, wherein such peripheral equipment as a recorder and a handheld terminal are connected to the apparatus.

In FIG. 8, a differential pressure transmitter (2), a water depth gauge 12, and a thermometer (13) are located on the signal-transmitting side, each being connected to a terminal plate (23a) located on the signal-receiving side. Distributors 24a, 24b and 24c located on the signal-receiving side are connected to a terminal plate (23a), wherein a handheld terminal (H.H.T.) (25) is connected to the distributor (24a). A recorder (26) is connected to the distributors 24a, 24b and 24c.

Additionally, a flowmeter 14 located on the signal-transmitting side and a pulse signal receiver (27) located on the signal-receiving side are connected to a terminal plate (23b), wherein a pulse signal recorder (28) is connected to the pulse signal receiver (27).

Output signals of 4 to 20 mA, for example, are provided by the differential pressure transmitter (2), water depth gauge 12 and thermometer (13). Input to the recorder (26) are signals of 1 to 5 V, for example, resulting from conversion of the output signals at the distributors 24a, 24b and 24c.

The recorder (26) functions as a computing unit, which performs such tasks as computing suspended-substance concentrations and making corrective calculations according to outputs from the water depth gauge 12 and thermometer (13), and records and displays the results of these tasks.

More specifically, corrections are made to the measured density and the output of the differential pressure transmitter (2), according to previously obtained data on a change in the density of water with temperature and the temperature characteristic of the differential pressure transmitter (2), such as those shown in FIGS. 2a and 2b, as well as to the temperature of water and the ambient temperature of the differential pressure transmitter (2) simultaneously measured with the thermometer (13).

The handheld terminal (25) is used to externally send signals for making the zero-point adjustment (reference density setting) of the differential pressure transmitter (2), setting the alarm and changing parameters, through the distributor (24a), to the differential pressure transmitter (2).

The flowmeter 14 is provided with a rotor driven by running water, for example, and the pulse signal receiver (27) emits a buzzer sound once every five revolutions, for example, made by the rotor of the flowmeter 14.

The pulse signal recorder (28) receives the frequency of buzzer sound emitted from the pulse signal receiver (27) as the frequency of pulses, measures the buzzer sound frequency for a given period of time, calculates the revolutions-per-second value of the rotor from the measured frequency, and evaluates the flow speed of the running water. The flow speed thus evaluated is used as reference data at a point in time when a suspended-substance concentration is measured.

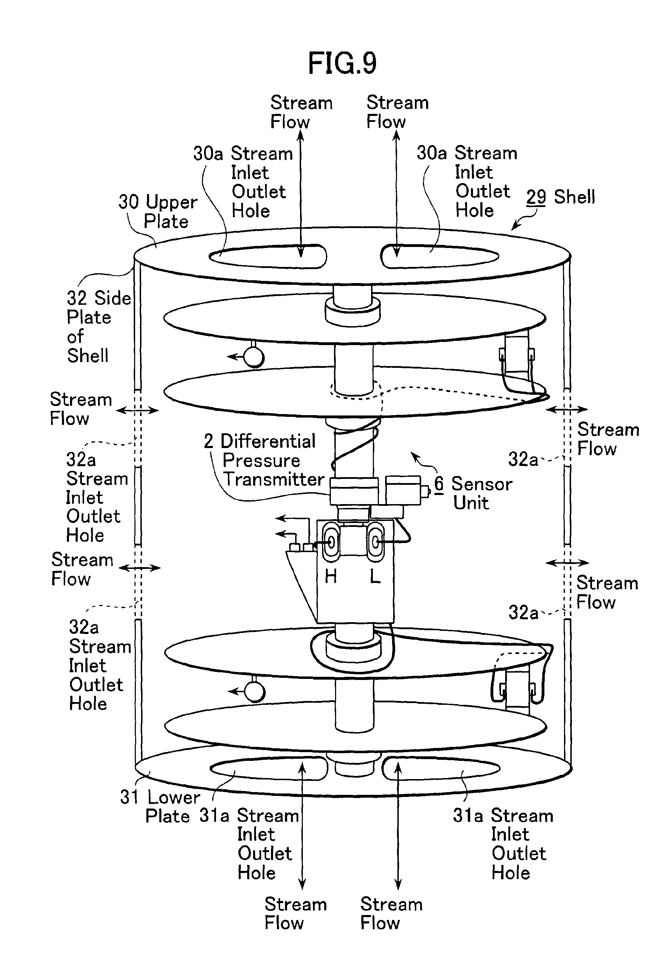

FIG. 9 is a schematic view showing the configuration of a shell wherein the sensor unit shown in FIG. 3 is housed.

In FIG. 9, a shell (29) is a hollow cylinder, consisting of circular upper plate (30), a circular lower plate (31), and a cylindrical side plate (32). Stream inlet outlet holes (30a) are formed in the upper plate (30), stream inlet outlet holes (31a) are formed in the lower plate (31), and stream inlet outlet holes (32a) are formed in the side plate (32). Note that in FIG. 9, the cross-sections of only main parts are shown with regard to the side plate (32) for the purpose of simplifying the drawing. Also note that the stream inlet outlet holes (30a), (31a) and (32a) may be provided with filters as necessary.

During measurement, the sensor unit (6) is housed in the shell (29) and the shell (29) is submerged in a stream flow, so that the stream flow is introduced therein through the stream inlet outlet holes (30a), 30b and 30c and the suspended-substance concentration of the stream flow is measured.

This method of measurement can prevent parts of a component mounted on the sensor unit (6), for example, the differential pressure transmitter (2), from being damaged by such foreign matter contained in the stream flow as gravel, driftwood or dirt. Additionally, the method helps increase the effect of streamlining the stream flow by housing the sensor unit (6) in the shell (29) wherein the stream inlet outlet holes (30a), (31a) and (32a) are formed. Yet additionally, it is possible to measure suspended-substance concentrations precisely and consistently by keeping uniform the ambient temperature of components, such as the differential pressure transmitter (2), mounted on the sensor unit (6).

Note that in the explanation given above, reference was made only to a case where the sensor unit (6) shown in FIG. 3 is housed in the shell (29). Alternatively, the sensor unit shown in FIG. 5 or FIG. 7 may be housed in the shell (29). This alternative method will provide the same behavior and effect as explained above.

## ADVANTAGEOUS EFFECTS OF THE INVENTION

As described above, according to a first aspect of the present invention, the pressure difference between two points distantly located in the depth direction of a liquid is detected without resort to optical measurement means, and the suspended-substance concentration of the liquid is measured according to the detected pressure difference. Consequently, it is possible to provide a method for measuring suspended-substance concentrations that allows for real-time, continuous measurement and easy maintenance and control of apparatus and provides high measurement accuracy and wide measuring ranges.

According to a second aspect of the present invention, an ambient temperature and the temperature of a liquid at which the pressure difference is detected are measured, the pressure difference is temperature-corrected according to the measured ambient temperature, and the average density is also temperature-corrected according to the measured temperature of the liquid. Consequently, it is possible to measure suspended-substance concentrations more precisely.

According to a third aspect of the present invention, there is provided a differential pressure transmitter for detecting the pressure difference between two points distantly located in the depth direction of a liquid without resort to optical measurement means. Consequently, it is possible to provide an apparatus for measuring suspended-substance concentrations that allows for real-time, continuous measurement and easy maintenance and control and provides high measurement accuracy and wide measuring ranges.

According to a fourth aspect of the present invention, detector pipes (low pressure side and high pressure side) are sealed with the same liquid (in which no suspended substance is mixed) as the liquid being measured. Consequently, there is no need for making temperature-based density corrections.

According to a fifth aspect of the present invention, there are provided ripple removal means for removing liquid ripples produced near pressure detector units for detecting the pressure difference between two points distantly located in the depth direction of a liquid. Consequently, it is possible to provide an apparatus for precisely measuring suspended-substance concentrations.

According to a sixth aspect of the present invention, there is provided a sensor unit to which pressure detector units, a differential pressure transmitter and ripple removal means are fixed so as to be integral therewith. Consequently, it is possible to provide an apparatus for measuring suspended-substance concentrations that allows for real-time, continuous measurement.

According to a seventh aspect of the present invention, there are provided straightner plates for removing horizontal liquid ripples produced near pressure detector units for detecting the pressure difference between two points distantly located in the depth direction of a liquid. Consequently, it is possible to provide an apparatus for precisely measuring suspended-substance concentrations.

According to an eighth aspect of the present invention, there are provided partition plates for removing vertical liquid ripples produced near pressure detector units for detecting the pressure difference between two points distantly located in the depth direction of a liquid. Consequently, it is possible to provide an apparatus for precisely measuring suspended-substance concentrations.

According to a ninth aspect of the present invention, there is provided a sensor unit to which pressure detector units, a differential pressure transmitter, straightner plates, and partition plates are fixed so as to be integral therewith. Consequently, it is possible to provide an apparatus for measuring suspended-substance concentrations that allows for real-time, continuous measurement.

According to a tenth aspect of the present invention, there are provided straightner plates for removing horizontal liquid ripples produced near pressure detector units for detecting the pressure difference between two points distantly located in the depth direction of a liquid, and the average pressure obtained by averaging pressures detected by first and second low-pressure side (high-pressure side) detector units is input to a differential pressure transmitter. Consequently, it is possible to provide an apparatus for precisely measuring suspended-substance concentrations.

According to an eleventh aspect of the present invention, there are provided straightner pipes for removing horizontal and vertical liquid ripples produced near pressure detector units for detecting the pressure difference between two points distantly located in the depth direction of a liquid. Consequently, it is possible to provide an apparatus for precisely measuring suspended-substance concentrations.

According to a twelfth aspect of the present invention, there is provided a sensor unit to which pressure detector units, a differential pressure transmitter, straightner pipes, and partition plates are fixed so as to be integral therewith. Consequently, it is possible to provide an apparatus for measuring suspended-substance concentrations that allows for real-time, continuous measurement.

According to a thirteenth aspect of the present invention, there are provided straightner pipes for removing horizontal and vertical liquid ripples produced near pressure detector units for detecting the pressure difference between two points distantly located in the depth direction of a liquid, and the average pressure obtained by averaging pressures detected by first and second low-pressure side (high-pressure side) detector units is input to a differential pressure transmitter. Consequently, it is possible to provide an apparatus for precisely measuring suspended-substance concentrations.

According to a fourteenth aspect of the present invention, there are provided straightner plates for removing horizontal liquid ripples produced near diaphragm seals for detecting the pressure difference between two points distantly located in the depth direction of a liquid. Consequently, it is possible to provide an apparatus for precisely measuring suspended-substance concentrations.

According to a fifteenth aspect of the present invention, there are provided partition plates for removing vertical liquid ripples produced near diaphragm seals for detecting the pressure difference between two points distantly located in the depth direction of a liquid. Consequently, it is possible to provide an apparatus for precisely measuring suspended-substance concentrations.

According to a sixteenth aspect of the present invention, there is provided a sensor unit to which diaphragm seals, a differential pressure transmitter, straightner plates, and partition plates are fixed so as to be integral therewith. Consequently, it is possible to provide an apparatus for measuring suspended-substance concentrations that allows for real-time, continuous measurement.

According to a seventeenth aspect of the present invention, a sensor unit is housed in a shell wherein stream inlet outlet holes for a liquid to pass through are formed. Consequently, it is possible to prevent parts of a component mounted on the sensor unit, for example, a differential pressure transmitter, from being damaged, increase the effect of streamlining the liquid, and measure suspended-substance concentrations more precisely and consistently by keeping uniform the ambient temperature of components, such as the differential pressure transmitter, mounted on the sensor unit.

**Claims**

1. A method for measuring the concentration of suspended substances mixed with a liquid, wherein the pressure difference between two points distantly located in the depth direction of said liquid is detected, the average density of said liquid between said two points is calculated from said pressure difference, and the difference between said average density and the predetermined reference density of said liquid is calculated as an index for determining said suspended-substance concentration.

2. The method of claim 1, wherein an ambient temperature at which said pressure difference is detected and the temperature of said liquid are measured, said pressure difference is temperature-corrected according to the measured ambient temperature, and said average density is also temperature-corrected according to the measured temperature of said liquid.

3. An apparatus to be submerged in a liquid in which suspended substances are mixed in order to measure the suspended-substance concentration of said liquid, comprising:

   low-pressure side and high-pressure side detector units submerged down to two points distantly located in the depth direction of said liquid;
   a differential pressure transmitter for converting the difference between pressures detected by said low-pressure side and high-pressure side detector units to an electric signal; and
   a computing unit for calculating the average density of said liquid between said two points according to the output of said differential pressure transmitter and further calculating the difference between said average density and the predetermined reference density of said liquid as an index for determining said suspended-substance concentration.

4. The apparatus of claim 3, wherein said low-pressure side detector unit is a detector pipe (low pressure side) connected to said differential pressure transmitter and sealed with said liquid in which none of said suspended substances is mixed and said high-pressure side detector unit is a detector pipe (high pressure side) also connected to said differential pressure transmitter and sealed with said liquid in which none of said suspended substances is mixed either.

5. The apparatus of claim 3, further comprising:

   first ripple removal means arranged in the vicinity of said detector pipe (low pressure side) in order to remove ripples of said liquid produced near said detector pipe (low pressure side); and
   second ripple removal means arranged in the vicinity of said detector pipe (high pressure side) in order to remove ripples of said liquid produced near said detector pipe (high pressure side).

6. The apparatus of claim 5 having a sensor unit, wherein said detector pipe (low pressure side), said detector pipe (high pressure side), said differential pressure transmitter, said first ripple removal means, and said second ripple removal means are fixed to said sensor unit so as to be integral therewith and said sensor unit is submerged in said liquid.

7. An apparatus to be submerged in a liquid in which suspended substances are mixed in order to measure the

EP 1 167 947 A2

suspended-substance concentration of said liquid, comprising:

first and second low-pressure side straightner plates which are flat and submerged in said liquid with the surfaces thereof positioned virtually perpendicular to said liquid's surface, while being arranged to be distant from and opposite to each other;
a low-side pressure hole provided on either of the opposing surfaces of said first and second low-pressure side straightner plates;
a detector pipe (low pressure side) connected to either of said first and second low-pressure side straightner plates so as to lead into said low-side pressure hole;
first and second high-pressure side straightner plates which are flat and submerged in the depth direction of said liquid distantly from said first and second low-pressure side straightner plates, with the surfaces thereof positioned virtually perpendicular to said liquid's surface, while being arranged to be distant from and opposite to each other;
a high-side pressure hole provided on either of the opposing surfaces of said first and second high-pressure side straightner plates;
a detector pipe (high pressure side) connected to either of said first and second high-pressure side straightner plates so as to lead into said high-side pressure hole;
a differential pressure transmitter for converting the difference between pressures detected by said detector pipe (low pressure side) and said detector pipe (high pressure side) to an electric signal; and
a computing unit for calculating the average density of said liquid according to the output of said differential pressure transmitter and further calculating the difference between said average density and the predetermined reference density of said liquid as an index for determining said suspended-substance concentration.

8. The apparatus of claim 7, further comprising:

first and second low-pressure side plates which are flat and arranged to be distant from each other in the depth direction of said liquid so as to sandwich said first and second low-pressure side straightner plates; and
first and second high-pressure side plates which are flat and arranged to be distant from each other in the depth direction of said liquid so as to sandwich said first and second high-pressure side straightner plates.

9. The apparatus of claim 8 having a sensor unit, wherein said first low-pressure side straightner plate, said second low-pressure side straightner plate, said detector pipe (low pressure side), said first high-pressure side straightner plate, said second high-pressure side straightner plate, said detector pipe (high pressure side), said differential pressure transmitter, said first low-pressure side plate, said second low-pressure side plate, said first high-pressure side plate, and said second high-pressure side plate are fixed to said sensor unit so as to be integral therewith and said sensor unit is submerged in said liquid.

10. An apparatus to be submerged in a liquid in which suspended substances are mixed in order to measure the suspended-substance concentration of said liquid, comprising:

a first low-pressure side straightner plate which is flat and submerged in said liquid with the surfaces thereof positioned virtually perpendicular to said liquid's surface, wherein a first low-side pressure hole is formed on one side of said first low-pressure side straightner plate;
a first low-pressure side detector pipe connected to said first low-pressure side straightner plate so as to lead into said first low-side pressure hole;
a second low-pressure side straightner plate which is flat and arranged to be distant from and opposite to one side of said first low-pressure side straightner plate and a second low-side pressure hole is formed on the side of said second low-pressure side straightner plate opposite to said first low-pressure side straightner plate;
a second low-pressure side detector pipe connected to said second low-pressure side straightner plate so as to lead into said second low-side pressure hole;
a first high-pressure side straightner plate which is flat and submerged in said liquid with the surfaces thereof positioned virtually perpendicular to said liquid's surface, while being made distant from said low-pressure side straightner plate in the depth direction of said liquid, wherein a first high-side pressure hole is formed on one side of said first high-pressure side straightner plate;
a first high-pressure side detector pipe connected to said first high-pressure side straightner plate so as to lead into said first high-side pressure hole;
a second high-pressure side straightner plate which is flat and arranged to be distant from and opposite to one side of said first high-pressure side straightner plate and a second high-side pressure hole is formed on the side of said second high-pressure side straightner plate opposite to said first high-pressure side straightner plate;

a second high-pressure side detector pipe connected to said second high-pressure side straightner plate so as to lead into said second high-side pressure hole;

a differential pressure transmitter for converting the pressure difference between the average pressure obtained by averaging pressures detected by said first and second low-pressure side detector pipes and the average pressure obtained by averaging pressures detected by said first and second high-pressure side detector pipes to an electric signal; and

a computing unit for calculating the average density of said liquid according to the output of said differential pressure transmitter and further calculating the difference between said average density and the predetermined reference density of said liquid as an index for determining said suspended-substance concentration.

11. The apparatus of claim 10, further comprising:

first and second low-pressure side plates which are flat and arranged to be distant from each other in the depth direction of said liquid so as to sandwich said first and second low-pressure side straightner plates; and

first and second high-pressure side plates which are flat and arranged to be distant from each other in the depth direction of said liquid so as to sandwich said first and second high-pressure side straightner plates.

12. The apparatus of claim 11 having a sensor unit, wherein said first low-pressure side straightner plate, said first low-pressure side detector pipe, said second low-pressure side straightner plate, said second low-pressure side detector pipe, said first high-pressure side straightner plate, said first high-pressure side detector pipe, said second high-pressure side straightner plate, said second high-pressure side detector pipe, said differential pressure transmitter, said first low-pressure side plate, said second low-pressure side plate, said first high-pressure side plate, and said second high-pressure side plate are fixed to said sensor unit so as to be integral therewith and said sensor unit is submerged in said liquid.

13. An apparatus to be submerged in a liquid in which suspended substances are mixed in order to measure the suspended-substance concentration of said liquid, comprising:

a low-pressure side straightner pipe which is tubular and submerged in said liquid with the central axis thereof positioned virtually parallel with said liquid's surface, wherein a low-side pressure hole leading inside said low-pressure side straightner pipe is formed in said low-pressure side straightner pipe;

a detector pipe (low pressure side) connected to said low-pressure side straightner pipe so as to lead into said low-side pressure hole;

a high-pressure side straightner pipe which is tubular and submerged in said liquid with the central axis thereof positioned virtually parallel with said liquid's surface, while being made distant from said low-pressure side straightner pipe in the depth direction of said liquid, and wherein a high-side pressure hole leading inside said high-pressure side straightner pipe is formed;

a detector pipe (high pressure side) connected to said high-pressure side straightner pipe so as to lead into said high-side pressure hole;

a differential pressure transmitter for converting the pressure difference between pressures detected by said detector pipe (low pressure side) and said detector pipe (high pressure side) to an electric signal; and

a computing unit for calculating the average density of said liquid according to the output of said differential pressure transmitter and further calculating the difference between said average density and the predetermined reference density of said liquid as an index for determining said suspended-substance concentration.

14. The apparatus of claim 13, further comprising:

first and second low-pressure side plates which are flat and arranged to be distant from each other in the depth direction of said liquid so as to sandwich said low-pressure side straightner pipes; and

first and second high-pressure side plates which are flat and arranged to be distant from each other in the depth direction of said liquid so as to sandwich said high-pressure side straightner pipe.

15. The apparatus of claim 14 having a sensor unit, wherein said low-pressure side straightner pipe, said detector pipe (low pressure side), said high-pressure side straightner pipe, said detector pipe (high pressure side), said differential pressure transmitter, said first low-pressure side plate, said second low-pressure side plate, said first high-pressure side plate, and said second high-pressure side plate are fixed to said sensor unit so as to be integral therewith and said sensor unit is submerged in said liquid.

16. An apparatus to be submerged in a liquid in which suspended substances are mixed in order to measure the suspended-substance concentration of said liquid, comprising:

a low-pressure side straightner pipe which is tubular and submerged in said liquid with the central axis thereof positioned virtually parallel with said liquid's surface and wherein a first low-side pressure hole leading inside said low-pressure side straightner pipe and a second low-side pressure hole positioned opposite to said first low-side pressure hole and also leading inside said low-pressure side straightner pipe are formed;

a first low-pressure side detector pipe connected to said low-pressure side straightner pipe so as to lead into said first low-side pressure hole;

a second low-pressure side detector pipe connected to said low-pressure side straightner pipe so as to lead into said second low-side pressure hole;

a high-pressure side straightner pipe which is tubular and submerged in said liquid with the central axis thereof positioned virtually parallel with said liquid's surface, while being made distant from said low-pressure side straightner pipe in the depth direction of said liquid, and wherein a first high-side pressure hole leading inside said high-pressure side straightner pipe and a second high-side pressure hole positioned opposite to said first high-side pressure hole and also leading inside said high-pressure side straightner pipe are formed;

a first high-pressure side detector pipe connected to said high-pressure side straightner pipe so as to lead into said first high-side pressure hole;

a second high-pressure side detector pipe connected to said high-pressure side straightner pipe so as to lead into said second high-side pressure hole;

a differential pressure transmitter for converting the pressure difference between the average pressure obtained by averaging pressures detected by said first and second low-pressure side detector pipes and the average pressure obtained by averaging pressures detected by said first and second high-pressure side detector pipes to an electric signal; and

a computing unit for calculating the average density of said liquid according to the output of said differential pressure transmitter and further calculating the difference between said average density and the predetermined reference density of said liquid as an index for determining said suspended-substance concentration.

17. The apparatus of claim 16, further comprising:

first and second low-pressure side plates which are flat and arranged to be distant from each other in the depth direction of said liquid so as to sandwich said low-pressure side straightner pipe; and

first and second high-pressure side plates which are flat and arranged to be distant from each other in the depth direction of said liquid so as to sandwich said high-pressure side straightner pipe.

18. The apparatus of claim 17 having a sensor unit, wherein said low-pressure side straightner pipe, said first low-pressure side detector pipe, said second low-pressure side detector pipe, said high-pressure side straightner pipe, said first high-pressure side detector pipe, said second high-pressure side detector pipe, said differential pressure transmitter, said first low-pressure side plate, said second low-pressure side plate, said first high-pressure side plate, and said second high-pressure side plate are fixed to said sensor unit so as to be integral therewith and said sensor unit is submerged in said liquid.

19. An apparatus to be submerged in a liquid in which suspended substances are mixed in order to measure the suspended-substance concentration of said liquid, comprising:

first and second low-pressure side straightner plates which are flat and submerged in said liquid with the surfaces thereof positioned virtually perpendicular to said liquid's surface, while being arranged to be distant from and opposite to each other;

a low-pressure side diaphragm seal provided on either of the opposing surfaces of said first and second low-pressure side straightner plates;

first and second high-pressure side straightner plates which are flat and submerged in the depth direction of said liquid distantly from said first and second low-pressure side straightner plates, with the surfaces thereof positioned virtually perpendicular to said liquid's surface, while being arranged to be distant from and opposite to each other;

a high-pressure side diaphragm seal provided on either of the opposing surfaces of said first and second high-pressure side straightner plates;

a differential pressure transmitter for converting the difference between pressures detected by said low-pressure side and high-pressure side diaphragm seals to an electric signal; and
a computing unit for calculating the average density of said liquid according to the output of said differential pressure transmitter and further calculating the difference between said average density and the predetermined reference density of said liquid as an index for determining said suspended-substance concentration.

20. The apparatus of claim 19, further comprising:

first and second low-pressure side plates which are flat and arranged to be distant from each other in the depth direction of said liquid so as to sandwich said first and second low-pressure side straightner plates; and
first and second high-pressure side plates which are flat and arranged to be distant from each other in the depth direction of said liquid so as to sandwich said first and second high-pressure side straightner plates.

21. The apparatus of claim 20 having a sensor unit, wherein said first low-pressure side straightner plate, said second low-pressure side straightner plate, said low-pressure side diaphragm seal, said first high-pressure side straightner plate, said second high-pressure side straightner plate, said high-pressure side diaphragm seal, said differential pressure transmitter, said first low-pressure side plate, said second low-pressure side plate, said first high-pressure side plate, and said second high-pressure side plate are fixed to said sensor unit so as to be integral therewith and said sensor unit is submerged in said liquid.

22. The apparatus of any of claims 6, 9, 12, 15, 18 and 21, further comprising a shell designed to house said sensor unit and provided with stream inlet outlet holes for said liquid to pass through.

# FIG.1

4 DETECTOR PIPE(HIGH PRESSURE SIDE)

3 DETECTOR PIPE(LOW PRESSURE SIDE)

h4

h3

H2

H1

P1   P2

H   L

h2

H

5 COMPUTING UNIT

h1

2 DIFFERENEIAL PRESSURE
TRANSMILTTER

1 TANK

# FIG.2A

## WATER DENSITY

# FIG.2B

## TEMPERATURE CHARACTERISTIC OF DIFFERENCIAL PRESSURE TRANSMITTER

## FIG.3

2 Differential Pressure Transmitter
3 Detector Pipe(Low Pressureside)
3a Detector Pipe 1(Low Pressure Side)
3b Detector Pipe 2(Low Pressure Side)
4 Detector Pipe(High Pressre Side)
4a Detector Pipe 1(High Pressure Side)
4b Detector Pipe 2(High Pressure Side)
5 Computing Unit
6 Sensor Unit
7 Stand
8a Straightner Plate 1(Low Pressure Side)
8b Straightner Plate 2(Low Pressure Side)
8c Conection Rod of Low Pressure Side
9a Straightner Plate 1(High Pressure Side)
9b Straightner Plate 2(High Pressure Side)
9c Conection Rod of Highpressure Side

10a Low Side Plate 1
10b Low Side Plate 2
10c Low Pressure Area
11a High Side Plate 1
11b High Side Plate 2
11c High Pressure Area
12 Water Depth Gauge
13 Thermometer
14a Flowmeter
14b Flowmeter
L Low Pressure Side
H High Pressure Side

## FIG.4A

8c(9c)

8a(9a)  8b(9b)

8e(9e)  8g(9g)

8d(9d)  8f(9f)

8c(9c)

## FIG.4B

8a(8b 9a 9b)

8e(8g 9e 9g)

8d(8f 9d 9f)

8a Straightner Plate 1(Low Pressure Side)
8b Straightner Plate 2(Low Pressure Side)
8c Conection Rod Of Low Pressure Side
8d Low Side Pressure Hole 1
8e Low Side Tube 1
8f Low Side Pressure Hole 2
8g LOW SIDE TUBE 2
9a Straightner Plate 1(High Pressure Side)
9b Straightner Plate 2(High Pressure Side)
9c Conection Rod Of Highpressure Side
9d High Side Pressure Hole 1
9e High Side Tube 1
9f High Side Pressure Hole 2
9g High Side Tube 2

FIG.5

2 Differential Pressure Transmitter
3 Detector Pipe(Low Pressureside)
3a Detector Pipe 1(Low Pressure Side)
3b Detector Pipe 2(Low Pressure Side)
4 Detector Pipe(High Pressre Side)
4a Detector Pipe 1(High Pressure Side)
4b Detector Pipe 2(High Pressure Side)
5 Computing Unit
6 Sensor Unit
7 Stand
10a Low Side Plate 1
10b Low Side Plate 2
10c Low Pressure Area

11a High Side Plate 1
11b High Side Plate 2
11c High Pressure Area
12 Water Depth Gauge
13 Thermometer
14a Flowmeter
14b Flowmeter
15 Low Side Straightner Pipe
16 High Side Straightner Pipe
L Low Pressure Side
H High Pressure Side

## FIG.6A

A
A'
15a(16a)
15(16)

## FIG.6B

15(16)
15c(16c)        15a(16a)
15d(16d)        15b(16b)

15 Low Side Straightner Pipe
15a Low Side Pressure Hole 1
15b Low Side Tube 1
15c Low Side Pressure Hole 2
15d Low Side Tube 2
16 High Side Straightner Pipe
16a High Side Hole 1
16b High Side Tube 1
16c High Side Hole 2
16d High Side Tube 2

# FIG.7

2 Differential pressuretransmitter
3 Detector pipe(low pressureside)
4 Detector pipe(high pressre side)
5 Computing unit
6 Sensor unit
7 Stand
8a Straightner Plate 1(Low Pressure Side)
9a Straightner Plate 1(High Pressure Side)
10a Low side plate 1
10b Low side plate 2
10c Low pressure area
11a High Side Plate 1
11b High Side Plate 2
11c High Pressure Area

12 Water depth gavge
13 Thermometer
14a Flowmeter
14b Flowmeter
17 Low side support plate
18 High side support plate
19 Low side capillary tube
20 High side capillary tube
21 Low side diaphuam seal
22 High side diaphuam seal
L Low pressure side
H High pressure side

# FIG.8

2 Differential Pressuretransmitter
12 Water Depth Gavge
13 Thermometer
14 Flowmeter
14b Flowmeter
23a Terminal Plate
23b Terminal Plate
24 Distributor
25 Handheld Terminal(H.H.T.)
26 Recorder
27 Pulse Signal Recorder
28 Pulse Signal Recorder

# FIG.9

Stream Flow

Stream Flow

30a Stream Inlet Outlet Hole

30a Stream Inlet Outlet Hole

29 Shell

30 Upper Plate

32 Side Plate of Shell

Stream Flow

Stream Flow

32a Stream Inlet Outlet Hole

2 Differential Pressure Transmitter

6 Sensor Unit

32a

Stream Flow

H  L

Stream Flow

Stream Flow

32a

32a Stream Inlet Outlet Hole

31 Lower Plate 31a Stream Inlet Outlet Hole

31a Stream Inlet Outlet Hole

Stream Flow

Stream Flow